# EUROPEAN PATENT APPLICATION

(11) **EP 3 518 022 A1**
(43) Date of publication of application: **31.07.2019**
(21) Application number: 17852889.9
(22) Date of filing: 12.09.2017
(51) Int. Cl.: G02B 27/01, B60K 35/00, G02B 26/10

(54) **VIRTUAL-IMAGE DISPLAY DEVICE**

(30) Priority: 21.09.2016 JP 2016184828
(71) Applicant: Nippon Seiki Co., Ltd., Nagaoka-shi, Niigata 940-8580 (JP)
(72) Inventor: SEKIYA, Shun, Nagaoka, Niigata (JP)
(74) Representative: Jackson, Richard Eric
(86) International application number: PCT/JP2017/032808
(87) International publication number: WO 2018/056112

(57) **Abstract**

Through the present invention, the amount of correction of a display image due to warping is reduced, and a virtual image having high display quality can be displayed. About the axis of a first direction X, a transmission-type screen 13 is inclined with respect to a surface 13P perpendicular to the optical axis 200A of an incident scanning beam 200 at a second rotation angle A2 of opposite sign to a first rotation angle A1 at which a scanner 12 is inclined with respect to a surface 12P perpendicular to a light beam 100 incident from a light source unit 11, whereby the transmission-type screen 13 is disposed so that a display image M is curved roughly along a negative direction of a second direction Y orthogonal to the first direction X, and the curvature direction of the display image M is in a direction of cancelling the curvature of a virtual image V generated by a curved surface shape of a first mirror 20, a second mirror 30, and a windshield 2.

## Description

### TECHNICAL FIELD

The present invention relates to a virtual-image display device that enables a driver of a vehicle to view a virtual image.

### BACKGROUND ART

A conventional virtual-image display device enables a virtual image to be viewed by a display device projecting a display image onto a display member (a windshield of a vehicle) positioned in front of a viewer. In such a virtual-image display device, it is common that a display light of the display image displayed by the display device is reflected by a reflecting portion (relay optical system) such as a mirror, and a display member, and bent or enlarged. Therefore, a distorted virtual image in which a portion of the display image is enlarged or reduced ends up being viewed.

The virtual-image display device described in Patent Literature 1 enables a virtual image with little distortion to be viewed by displaying, on the display device, a display image that has undergone processing called warping which pushes out or narrows a portion of the display image so as to cancel out the distortion of the virtual image caused by the relay optical system.

### PRIOR ART DOCUMENT

### PATENT DOCUMENT

Patent Literature 1: Japanese Patent Application Publication No. 2011-105306

### SUMMARY OF THE INVENTION

### PROBLEMS TO BE SOLVED BY THE INVENTION

However, when reducing distortion of the virtual image only by such warping, it is necessary to warp the display image considerably. In other words, it is necessary to push out a portion of the display image considerably, or narrow a portion of the display image considerably, so even when the same display image is displayed, the size displayed on the display device will be different in the pushed-out region that it is in the narrowed region on the display device. That is, the number of pixels in the unit area of the pushed-out region will end up differing largely from the number of pixels in the unit area of the narrowed region, so the resolution of the virtual image will end up being different for each displayed region, which is a problem.

Also, if the amount of distortion of the virtual image is large, the distortion of the virtual image is unable to be canceled out only by warping, so ultimately the virtual image will end up being distorted, which is a problem.

Therefore, one object of the present invention is to provide a virtual-image display device capable of reducing a correction amount of a display image by warping, and displaying a virtual image having high display quality.

### SOLUTION TO PROBLEM

A first aspect of the present invention relates to a virtual-image display device having a relay optical system (20, 30) which displays a display image (M) on a light transmissive transmission-type screen (13), by scanning, with a scanner (13), a light beam (100) emitted from a light source (11), as a scanning beam (200), in a main scanning direction (Dx) and a sub-scanning direction (Dy) orthogonal to the main scanning direction, and enables a virtual image (V) based on the display image to be viewed superimposed on a display member, wherein
the transmission-type screen is arranged
inclined with respect to a plane (13P) perpendicular to an optical axis of the incident scanning beam, at a second rotation angle (A2) having a sign opposite the sign of a first rotation angle (A1) at which the scanner (12) is inclined with respect to a plane (12P) perpendicular to the incident light beam, with a first direction (X) as an axis, when a reflecting member that reflects the scanning beam is not arranged in a light path of the scanning beam between the scanner and the transmission-type screen or an even number of the reflecting members are arranged in the light path of the scanning beam between the scanner and the transmission-type screen, and
inclined with respect to the plane perpendicular to the optical axis of the incident scanning beam, at a second rotation angle (A2) having the same sign as the first rotation angle, with the first direction (X) as the axis, when an odd number of the reflecting members are arranged between the scanner and the transmission-type screen, and
such that a direction of curvature of the display image displayed on the transmission-type screen, which occurs in a second direction (Y) orthogonal to the first direction due to inclination of the transmission-type screen, is a direction that cancels out curvature of the virtual image caused by the relay optical system and the display member.

### EFFECT OF THE INVENTION

According to the present invention, it is possible to reduce the amount of correction of a display image by warping, and display a virtual image having high display quality.

### BRIEF DESCRIPTION OF THE DRAWINGS

Fig. 1 is a view illustrating the configuration of a virtual-image display device according to a first embodiment of the present invention.
Fig. 2 is a view of an optical scanning-type display device in the embodiment viewed from an X-axis direction.
Fig. 3 is a view of the optical scanning-type display device in the embodiment viewed from a Y-axis direction.
Fig. 4 is a view of the plotting of spot positions of scanning beams when a scanner irradiates the scanning beams at a total of 25 locations of five positions in a first direction and five positions in a second direction on the transmission-type screen, according to the embodiment, viewed from a third direction, and shows an example of the curvature of the spot positions.
Fig. 5 is a view of a modified example of the optical scanning-type display device according to the embodiment viewed from the X-axis direction.

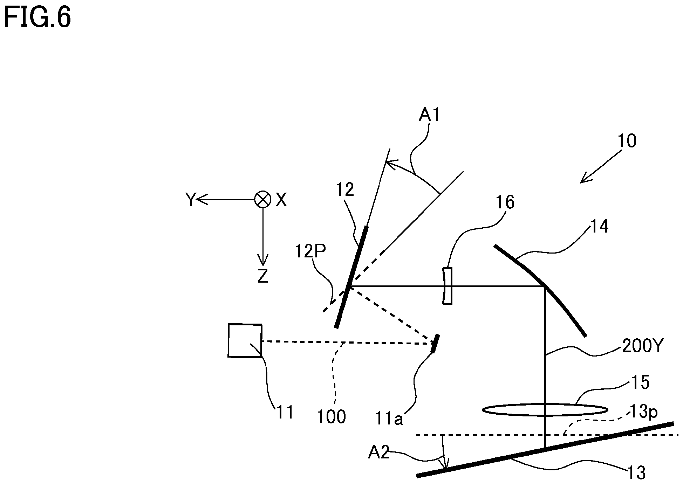

Fig. 6 is a view of an optical scanning-type display device according to a second embodiment of the present invention viewed from the X-axis direction.

### MODE FOR CARRYING OUT THE INVENTION

### (First embodiment)

Hereinafter, a virtual-image display device according to a first embodiment of the present embodiment will be described with reference to the drawings. The virtual-image display device according to the present embodiment is a head-up display device (hereinafter referred to as "HUD device") 1 mounted in a vehicle, for example. This HUD device 1 includes a so-called optical scanning-type display device 10. The HUD device 1 is provided in a dashboard of the vehicle, for example, and irradiates display light L1, L2, and L3 representing a display image M toward a windshield (one example of a display member) 2. The display light L1, L2, and L3 reflected by the windshield (projecting member) 2 is irradiated to a predetermined eye-box E, and a viewer (primarily a driver) is able to view a virtual image V of the display image M by looking into this eye-box E.

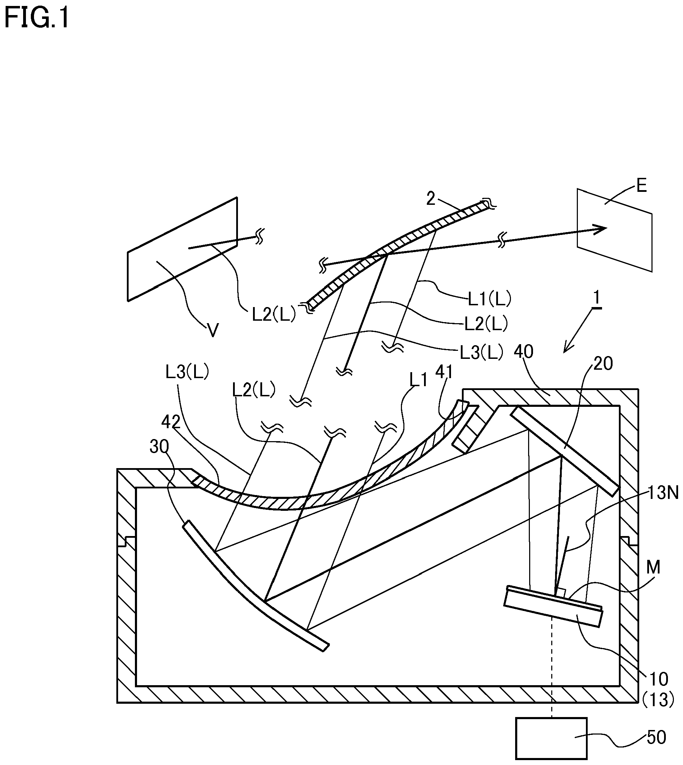

As shown in Fig. 1, the HUD device 1 includes the optical scanning-type display device 10 that displays the display image M, a first mirror 20 and a second mirror 30 which are a relay optical system that directs the display light L1, L2, and L3 of the display image M displayed by the optical scanning-type display device 10 toward the eye-box E, a housing 40 which houses the optical scanning-type display device 10, the first mirror 20, and the second mirror 30, and a control unit 50 which performs electrical control of the HUD device 1.

The housing 40 is formed in a box shape from hard resin material or the like. An opening 41 is formed in a portion of a peripheral wall of the housing 40 that faces the windshield 2. The opening 41 is blocked by a window 42 made of transparent resin material or the like. The display light L1, L2, and L3 passes through the window 42 and heads toward the windshield 2 from inside the housing 40. Each of the components of the HUD device 1, except for the control unit 50, is built into the housing 40. Note that the control unit 50 may be provided in the housing 40.

The control unit 50 includes, for example, a microcomputer, an external interface, RAM (Random Access Memory), and ROM (Read Only Memory), and the like. The control unit 50 performs warping on image data and controls the optical scanning-type display device 10 on the basis of the warped image data, in order to display the virtual image V with little distortion. Note that with the control unit 50, the control unit 50 that performs warping and the control unit 50 that controls the optical scanning-type display device 10 may be provided separately, and the control unit 50 that performs warping and the control unit 50 that controls the optical scanning-type display device 10 may be housed together inside the housing 40 of the HUD device 1, or one or both may be arranged outside of the housing 40 of the HUD device 1.

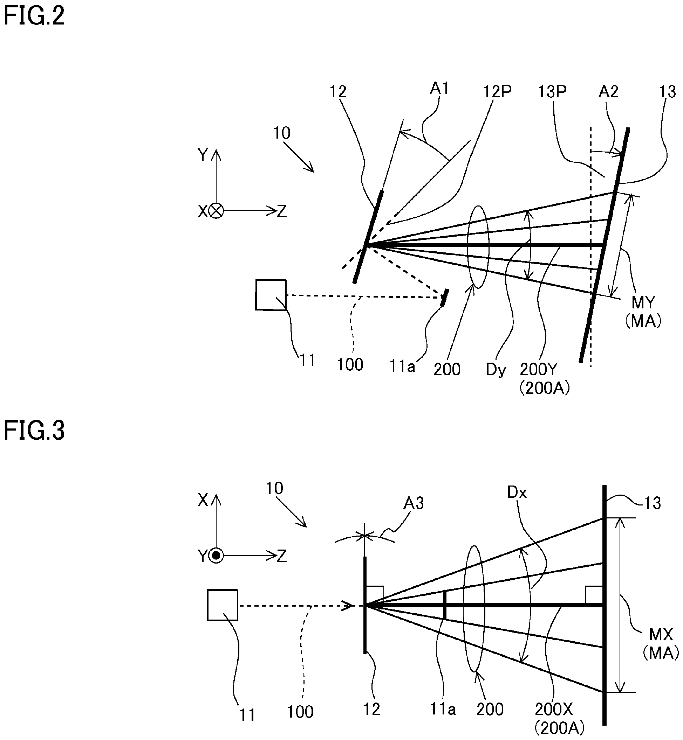

Fig. 2 and Fig. 3 are views for explaining the arrangement of the components of the optical scanning-type display device 10. Note that in a plane 13P perpendicular to an optical axis 200A of a scanning beam 200 that a scanner 12 reflects toward the transmission-type screen 13, a first direction is defined as an X axis, a second direction orthogonal to the first direction X is defined as a Y axis, and a third direction orthogonal to both the first direction X and the second direction Y is defined as a Z axis.

The optical scanning-type display device 10 shown in Fig. 2 includes a light source unit 11, the scanner 12 formed by a MEMS (Micro Electro Mechanical System) mirror, and the transmission-type screen 13, and displays the display image M on the transmission-type screen 13. Note that the display image M is distorted in advance so as to cancel out distortion (curving) caused by the relay optical system (the first mirror 20 and the second mirror 30) and the display member (the windshield 2), and displayed on the transmission-type screen 13. This distortion of the display image M is caused by warping by the control unit 50 described above, and the arrangement of the components of the optical scanning-type display device 10 that will be described later.

The light source unit 11 emits a combined light beam 100 in which light beams of a plurality of different colors such as red, green, and blue have been combined, for example. The light source unit 11 is formed by a light combining unit, not shown, that includes a semiconductor laser light source, not shown, that emits a monochromatic light beam, a condenser lens, not shown, that is positioned on a light path of the monochromatic light beam emitted from the semiconductor laser light source, and condenses the monochromatic light beam, and a dichroic mirror for aligning the traveling direction of the monochromatic light beam, and the like, for example. Note that the light source unit 11 may also include a turning mirror 11a that is arranged in the light path of the combined light beam 100 emitted from the light source unit 11, and reflects the combined light beam 100 toward the scanner 12. In this case, the light source unit 11 is arranged on the back surface side even with the reflective surface of the scanner 12 in a static state, and the turning mirror 11a is arranged on the front surface side even with the reflective surface of the scanner 12. As a result, there is less likely to be interference between the light source unit 11 and the scanning beam 200 scanned by the scanner 12, so the degree of freedom in the arrangement of the light source unit 11, the scanner 12, and the transmission-type screen 13 improves. Also, the incident angle of the combined light beam 100 incident to the scanner 12 can be smaller, so the scanning beam 200 can be more easily focused on the transmission-type screen 13, and the display quality of the display image M displayed on the transmission-type screen 13 can be more easily maintained, compared to when the incident angle is large. Note that the turning mirror 11a may be omitted. Also, the turning mirror 11a may be formed in a curved surface shape so as to reflect the received combined light beam 100 to the scanner 12 after optically adjusting the received combined light beam 100. Note that hereinafter, the combined light beam 100 will also be referred to simply as light beam 100.

The scanner 12 is formed by a piezoelectric driven biaxial laser light scanning mirror, for example. As shown in Fig. 2, the scanner 12 swings the reflective surface in two axial directions in response to a control signal input from the control unit 50. More specifically, the scanner 12 receives the light beam 100, and directs the scanning beam 200, which is reflected light obtained by reflecting this light beam 100, toward the transmission-type screen 13. The scanner 12 reciprocally moves the irradiation position of the scanning beam 200 on the transmission-type screen 13 at a fast rate in the main scanning direction Dx roughly along the first direction X while reciprocally moving the irradiation position of the scanning beam 200 on the transmission-type screen 13 in the sub-scanning direction Dy roughly along the second direction Y The term "roughly along" here means equal to or less than 20 degrees with respect to a predetermined axis.

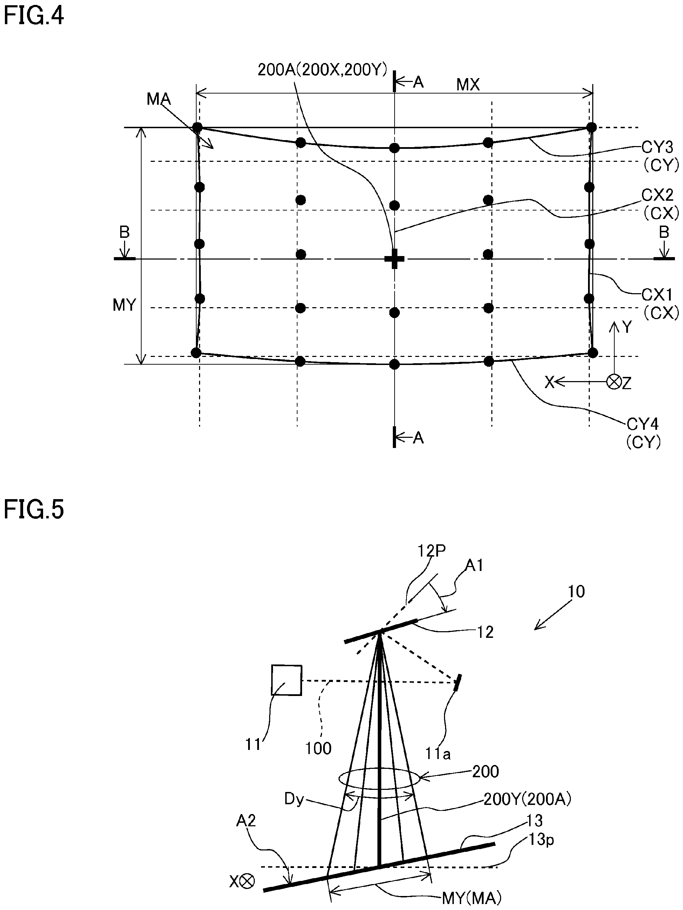

With the scanner 12, both the scanning angle in the main scanning direction Dx and the scanning angle in the sub-scanning direction are set to equal to or less than ± 20 degrees, for example, and, as shown in Fig. 4, the scanner 12 has a displayable range MA where the display image M is defined as displayable, in which a range MX in the first direction X is long, and a range MY in the second direction is short, on the transmission-type screen 13. Note that a state where the scanner 12 is in the static state described above refers to a state in which the reflective surface of the scanner 12 is at a scanning angle that directs the scanning beam 200 to substantially the center in the main scanning direction Dx, and a scanning angle that directs the scanning beam 200 to substantially the center in the sub-scanning direction Dy. In a static state, the scanner 12 of the present embodiment is arranged inclined by a first rotation angle A1 in a CCW direction with respect to a plane 12P orthogonal to the incident light beam 100, as shown in Fig. 2, around the first direction X, and orthogonal to the incident light beam 100, as shown in Fig. 3, around the second direction Y. Note that a scanning beam 200Y in Fig. 2 is the scanning beam 200 when the scanner 12 is in the static state in the sub-scanning direction Dy around the first direction X, and is incident to substantially the center of the range MY in the sub-scanning direction Dy of the displayable range MA on the transmission-type screen 13, and a scanning beam 200X in Fig. 3 is the scanning beam 200 when the scanner 12 is in the static state in the main scanning direction Dx around the second direction Y, and is incident to substantially the center of the range MX in the main scanning direction Dx of the displayable range MA on the transmission-type screen 13. Note that hereinafter, the scanning beam 200Y described above will also be referred to as a sub-scanning optical axis 200Y, and the scanning beam 200X will also be referred to as a main scanning optical axis 200X. Note that in the present embodiment, the scanner 12 in a static state is arranged so as to be orthogonal to the incident light beam 100 around the second direction Y, but is not limited to this, and may be arranged inclined with respect to the incident light beam 100.

The transmission-type screen 13 is a micro lens array that functions as an exit pupil expander (EPE) which receives the incident scanning beam 200 and expands an exit pupil, and in which a plurality of micro lenses are arranged, for example. In the present embodiment, the transmission-type screen 13 has a flat planar shape, but a portion or all of the transmission-type screen 13 may be curved. The transmission-type screen 13 of the present embodiment is arranged such that the transmission-type screen 13 is inclined by a second rotation angle A2 in a CW direction, which is opposite the direction of inclination with respect to the plane 12P orthogonal to the incident light beam 100 (the CCW direction), with respect to the plane 13P orthogonal to the sub-scanning optical axis 200Y, as shown in Fig. 2, around the first direction X, and orthogonal to the incident main scanning optical axis 200X, as shown in Fig. 3, around the second direction Y that is orthogonal to the first direction X.

Note that around the first direction X shown in Fig. 2, the scanner 12 of the embodiment in a static state is inclined in the CCW direction with respect to the plane 12P orthogonal to the incident light beam 100, and the transmission-type screen 13 is inclined in the CW direction with respect to the plane 13P orthogonal to the sub-scanning optical axis 200Y, but as a modified example, the scanner 12 may be inclined in the CW direction with respect to the plane 12P, and the transmission-type screen 13 may be inclined in the CCW direction with respect to the plane 13P, as shown in Fig. 5.

Fig. 4 is a view of the plotting of spot positions of the scanning beams 200 when the scanner 12 irradiates the scanning beams 200 at a total of 25 locations of five positions in the first direction X and five positions in the second direction Y on the transmission-type screen 13, viewed from a third direction Z, and shows an example of the curvature of the spot positions. Note that the spot positions in the 25 locations shown in Fig. 4 are spot positions when the scanner 12 irradiates the scanning beam 200 at a total of 25 locations of five positions evenly in the main scanning direction Dx and five positions evenly in the sub-scanning direction Dy, and are arranged distorted in a pincushion fashion on the plane 13P, when irradiated on the plane 13P orthogonal to the optical axis 200A of the scanning beam 200 of the scanner 12. That is, Fig. 4 shows the curvature of the spot positions of the scanning beam 200, which is created by inclining the transmission-type screen 13 at the second rotation angle A2 having a sign opposite that of the first rotation angle A1 at which the scanner 12 is inclined with respect to the plane 12P perpendicular to the incident light beam 100, with respect to the plane 13P perpendicular to the optical axis 200A of the incident scanning beam 200, with the first direction X as the axis, as described above.

The curvature of the spot positions of the scanning beam 200 is classified into a curvature CX that is curved in the first direction X, and a curvature CY that is curved in the second direction Y. The curvature CY (a third curvature CY3 and a fourth curvature CY4) that is curved in the second direction Y curves convexly in the negative direction of the second direction Y, with the spot position nearest the scanner 12, of the five spot positions arranged in the first direction (X), as the vertex.

The curvature CX (a first curvature CX1 and a second curvature CX2) that is curved in the first direction X curves convexly roughly toward the optical axis 200A of the scanning beam 200, with the spot position nearest the sub-scanning optical axis 200Y of the scanner 12, of the five spot positions arranged in the second direction Y, as the vertex.

The first mirror (relay optical system) 20 is a mirror that reflects the display light L based on the display image M displayed by the transmission-type screen 13, and is formed by a plane mirror, for example. Note that the first mirror 20 may have a reflective surface having a cylindrical curved surface shape having a curvature in only one direction, a toroidal curved surface shape in which the curvature in one direction is different from the curvature in a direction orthogonal thereto, or a free-form curved surface shape, or the like, and may have an enlarging function that makes an enlarged virtual image V of the display image M displayed on the transmission-type screen 13, a function that corrects the distortion of the virtual image V caused by the curved surface shape of the windshield 2, or a function that adjusts the position where the virtual image V is formed, or the like.

The second mirror (relay optical system) 30 is a mirror having a light correcting function that corrects the display light L reflected by the first mirror 20 and reflects the corrected display light L toward the windshield (display member) 2, and is formed by a concave mirror having a concave reflective surface, for example. The light correcting function of the second mirror 30 is primarily an enlarging function that makes an enlarged virtual image V of the display image M displayed on the transmission-type screen 13, a function that corrects the distortion of the virtual image V caused by the curved surface shape of the windshield 2, or a function that adjusts the position where the virtual image V is formed, or the like.

Note that the relay optical system that enables the virtual image V based on the display image M to be viewed superimposed on the windshield 2 by correcting projecting, on the windshield 2, the display light L of the display image M displayed on the transmission-type screen 13 in the present invention, while correcting the display light L, is not limited to only the first mirror 20 and the second mirror 30. In the relay optical system described above, the first mirror 20 and/or the second mirror 30 may be replaced with a refractive optical system such as a lens, or another optical functional member, for example. Also, a reflective optical system, a refractive optical system, or another optical functional member or the like may be added separately from the first mirror 20 and the second mirror 30 described above.

As described above, the transmission-type screen 13 of the present embodiment is arranged inclined with respect to the plane 13P perpendicular to the optical axis 200A (the sub-scanning optical axis 200Y) of the incident scanning beam 200, at the second rotation angle A2 having a sign opposite that of the first rotation angle A1 at which the scanner 12 is inclined with respect to the plane 12P perpendicular to the incident light beam 100, with the first direction X as the axis, so the display image M displayed on the transmission-type screen 13 curves roughly along the negative direction of the second direction Y that is orthogonal to the first direction X. Then, with the HUD device 1 of the present embodiment, the transmission-type screen 13 is arranged such that the direction of curvature of the display image M displayed on the transmission-type screen 13 caused by the inclination of the transmission-type screen 13 described above (the direction roughly along the negative direction of the second direction Y) cancels out the curvature of the virtual image V caused by the curved surface shapes of the first mirror 20, the second mirror 30, and the windshield 2 that are the relay optical system. Typically, the virtual image V displayed superimposed on the windshield 2 by the HUD device 1 curves vertically downward as viewed from the viewer, but the transmission-type screen 13 is arranged such that the direction of curvature of the display image M projected onto the windshield 2 is vertically upward. As a result, the curvature of the virtual image V caused by the relay optical system (the first mirror 20 and the second mirror 30) of the HUD device 1 and the display member (the windshield 2), and the curvature of the virtual image V caused by the inclination of the transmission-type screen 13 cancel each other out, so the virtual image V with little distortion can be generated. Note that the direction of curvature of the virtual image V caused by the relay optical system (the first mirror 20 and the second mirror 30) of the HUD device 1 and the display member (the windshield 2), and the direction of curvature of the virtual image V caused by the inclination of the transmission-type screen 13 need not be exactly opposite directions (180 deg) as long as they are roughly opposite directions of approximately 180 deg ± 15 deg.

Also, with the first direction X as the axis, the absolute value of the second rotation angle A2 at which the transmission-type screen 13 is inclined with respect to the plane 13P perpendicular to the optical axis 200A of the incident scanning beam 200 may be equal to or less than the absolute value of the first rotation angle A1 at which the scanner 12 is inclined with respect to the plane 12P perpendicular to the optical axis 100A of the incident light beam 100. As a result, the curvature CX in the first direction X of the display image M displayed on the transmission-type screen 13 can be kept low. Also, the absolute value of the second rotation angle A2 at which the transmission-type screen 13 is inclined with respect to the plane 13P perpendicular to the optical axis 200A of the incident scanning beam 200 is preferably 0.3 times or more the absolute value of the first rotation angle A1 at which the scanner 12 is inclined with respect to the plane 12P perpendicular to the optical axis 100A of the incident light beam 100.

Also, the scanner 12 may be arranged such that the absolute value of the first rotation angle A1 with respect to the plane 12P perpendicular to the incident light beam 100 with the first direction X as the axis is greater than the absolute value of a third rotation angle A3 with respect to the plane 12P perpendicular to the incident light beam 100 with the second direction Y as the axis. As a result, the curvature CX in the first direction X of the display image M displayed on the transmission-type screen 13 can be kept low. Also, the third rotation angle A3 may be zero deg as in the first embodiment described above.

Also, the rotational direction of the second rotation angle A2 of the transmission-type screen 13 may be set so as to be a rotational direction in which a normal line 13N of the transmission-type screen 13 is away from the second mirror 30. As a result, external light entering from outside the HUD device 1 will be reflected by the front surface side of the transmission-type screen 13, so a reduction in contrast of the virtual image V caused by this reflected light traveling toward the eye-box E can be suppressed.

A second embodiment of the virtual-image display device of the present invention will be described. The second embodiment is a modified example of the first embodiment described above, so only portions that differ from the first embodiment will be described, and descriptions of like portions will be omitted. Also, the same reference characters as those used in the description of the first embodiment will be used for constituent elements common to the first embodiment.

First, the optical scanning-type display device 10 of the virtual-image display device of the second embodiment shown in Fig. 5 differs in that it has one reflecting member 14 in the light path of the scanning beam 200 between the scanner 12 and the transmission-type screen 13. In this way, when an odd number of the reflecting members 14 are provided in the light path of the scanning beam 200 between the scanner 12 and the transmission-type screen 13, the relationship of the rotational directions of the scanner 12 and the transmission-type screen 13 in the optical scanning-type display device 10 described in the first embodiment is reversed. That is, in the second embodiment, the first rotation angle A1 of the scanner 12 inclined with respect to the plane 12P perpendicular to the incident light beam 100, and the second rotation angle A2 of the transmission-type screen 13 inclined with respect to the plane 13P perpendicular to the incident scanning beam 200 will have the same sign (both will be the in CCW direction in Fig. 5). Note that when an even number of the reflecting members 14 are arranged in the light path of the scanning beam 200 between the scanner 12 and the transmission-type screen 13, the first rotation angle A1 of the scanner 12 inclined with respect to the plane 12P perpendicular to the incident light beam 100, and the second rotation angle A2 of the transmission-type screen 13 inclined with respect to the plane 13P perpendicular to the incident scanning beam 200 will have opposite signs, just like the first embodiment.

The reflecting member 14 has a free-form curved surface shape, and adjusts the light path of the scanning beam 200 from the scanner 12 by this curved surface shape. More specifically, the reflecting member 14 may function as curvature adjusting means for adjusting the magnitude of the curvature CY in the second direction Y shown in Fig. 4. The reflecting member 14 adjusts the light path of the scanning beam 200 such that a curvature CY4, which is a relatively small curvature in the second direction Y caused by the inclination of the transmission-type screen 13 shown in Fig. 4, increases, and reflects toward the transmission-type screen 13, for example. Note that the reflecting member 14 may adjust the light path of the scanning beam 200 such that the curvature Y4, which is the smallest curvature in the second direction Y caused by the inclination of the transmission-type screen 13, becomes the largest curvature in the second direction Y, and reflect toward the transmission-type screen 13. Note that the reflecting member 14 may adjust the light path of the scanning beam 200 such that the curvature CY of the entire region in the second direction Y on the transmission-type screen 13 becomes larger, or may adjust the light path of the scanning beam 200 such that only the curvature CY of part of the region becomes larger.

Note that in the present invention, curvature adjusting means for adjusting the curvature CY in the second direction Y of the display image M, in which the magnitude of the curvature CY in the second direction Y of the display image M caused by the inclination of the transmission-type screen 13 is smaller than that at another region, such that the curvature CY in the second direction Y of the display image M becomes larger, may be formed by one or a plurality of refractive optical systems and/or reflective optical systems which are arranged in the light path of the scanning beam 200 between the scanner 12 and the transmission-type screen 13, and which correct the light path of the scanning beam 200. Also, the curvature adjusting means may be formed by the control unit 50 capable of warping image data.

Also, the optical scanning-type display device 10 of the virtual-image display device of the second embodiment may have a field lens 15 arranged near the transmission-type screen 13 in the light path of the scanning beam 200 between the scanner 12 and the transmission-type screen 13.

The field lens 15 has a positive refractive power (optical power), and is arranged such that a principal surface, not shown, is not parallel to the transmission-type screen 13, and adjusts the incident angle of the scanning beam 200 to the transmission-type screen 13. The surface shape of the field lens is a free-form curved surface that is axisymmetrical with respect to the center axis of the field lens 15, for example. Note that the surface shape of the field lens 15 may be aspherical or may be off-axis or tilted with respect to the optical axis 200A of the scanning beam 200.

Also, the optical scanning-type display device 10 of the virtual-image display device of the second embodiment may have a window 16 arranged near the scanner 12 in the light path of the scanning beam 200 between the scanner 12 and the transmission-type screen 13.

The window 16 is shaped to have a negative refractive power (optical power). The surface shape of the window 16 may be spherical, aspherical, a free-form curve, or an axisymmetrical shape in which the center axis is off from the optical axis 200A of the scanning beam 200.

As described above, embodiments have been described as examples of the technology disclosed in the present application. However, the technology in the present disclosure is not limited to this, and can also be applied to embodiments in which changes, modifications, replacements, additions, or omissions, etc., have been made without departing from the scope of the present invention. Also, the various constituent elements disclosed in the present application can also be combined to form a new embodiment.

### INDUSTRIAL APPLICABILITY

The present invention is can be applied as a display device that enables a virtual image to be viewed, such as a head-up display device to be mounted in a vehicle.

### DESCRIPTION OF REFERENCE NUMERALS

- 1: HUD device (virtual-image display device)
- 2: Windshield (display member)
- 10: Optical scanning-type display device
- 11: Light source unit
- 11a: Turning mirror
- 12: Scanner
- 12P: Plane
- 13: Transmission-type screen
- 13N: Normal line
- 13P: Plane
- 14: Reflecting member (curvature adjusting means)
- 15: Field lens
- 16: Window
- 20: First mirror (relay optical system)
- 30: Second mirror (relay optical system)
- 50: Control unit (curvature adjusting means)
- 100: Light beam (combined light beam)
- 100A: Optical axis
- 200: Scanning beam
- 200A: Optical axis
- 200X: Main scanning optical axis
- 200Y: Sub-scanning optical axis
- A1: First rotation angle
- A2: Second rotation angle
- A3: Third rotation angle
- CX: Curvature
- CY: Curvature
- Dx: Main scanning direction
- Dy: Sub-scanning direction
- E: Eye-box
- L: Display light
- M: Display image
- MA: Displayable range
- V: Virtual image

## Claims

1. A virtual-image display device having a relay optical system (20, 30) which displays a display image (M) on a light transmissive transmission-type screen (13), by scanning, with a scanner (12), a light beam (100) emitted from a light source unit (11), as a scanning beam (200), in a main scanning direction (Dx) and a sub-scanning direction (Dy) orthogonal to the main scanning direction, and enables a virtual image (V) based on the display image to be viewed superimposed on a display member, wherein
the transmission-type screen is arranged
inclined with respect to a plane (13P) perpendicular to an optical axis of the incident scanning beam, at a second rotation angle (A2) having a sign opposite the sign of a first rotation angle (A1) at which the scanner is inclined with respect to a plane (12P) perpendicular to the incident light beam, with a first direction (X) as an axis, when a reflecting member that reflects the scanning beam is not arranged in a light path of the scanning beam between the scanner and the transmission-type screen or an even number of the reflecting members are arranged in the light path of the scanning beam between the scanner and the transmission-type screen, and
inclined with respect to the plane perpendicular to the optical axis of the incident scanning beam, at a second rotation angle (A2) having the same sign as the first rotation angle, with the first direction (X) as the axis, when an odd number of the reflecting members are arranged between the scanner and the transmission-type screen, and
such that a direction of curvature of the display image displayed on the transmission-type screen, which occurs in a second direction (Y) orthogonal to the first direction due to inclination of the transmission-type screen, is a direction that cancels out curvature of the virtual image caused by the relay optical system and the display member.

2. The virtual-image display device according to claim 1, wherein
the transmission-type screen is arranged such that an absolute value of the second rotation angle becomes equal to or less than an absolute value of the first rotation angle of the scanner.

3. The virtual-image display device according to claim 1 or claim 2, wherein
the transmission-type screen is arranged such that the absolute value of the second rotation angle is 0.3 times or more the absolute value of the first rotation angle of the scanner.

4. The virtual-image display device according to any one of claims 1 to 3, wherein
the scanner is arranged such that the absolute value of the first rotation angle with the first direction as the axis, with respect to the plane perpendicular to the incident light beam is greater than an absolute value of a third rotation angle (A3) with the second direction as the axis.

5. The virtual-image display device according to any one of claims 1 to 4, wherein
the scanner has a displayable range (MA) capable of displaying, on the transmission-type screen, the display image in which a length (MX) in the first direction is longer than a length (MY) in the second direction.

6. The virtual-image display device according to any one of claims 1 to 5, wherein
the relay optical system includes at least a first mirror (20) that reflects a display light (L) based on the display image of the transmission-type screen, and a second mirror (30) that reflects the display light reflected by the first mirror toward the display member, and
the second rotation angle of the transmission-type screen is in a rotational direction in which a normal line of the transmission-type screen is away from the second mirror.

7. The virtual-image display device according to any one of claims 1 to 6, further comprising:
a field lens having a positive optical power and a principal surface which is not parallel to the transmission-type screen, in the light path of the scanning beam between the scanner and the transmission-type screen.

8. The virtual-image display device according to any one of claims 1 to 7, further comprising:
a turning mirror that reflects the light beam emitted by the light source unit toward the scanner, in the light path of the light beam between the light source unit and the scanner,
wherein the light source unit is arranged on a back surface side of a reflective surface of the scanner, and the turning mirror is arranged on a front surface side of the reflective surface of the scanner.

9. The virtual-image display device according to any one of claims 1 to 8, further comprising:
curvature adjusting means for adjusting a curvature in the second direction of the display image in which the magnitude of the curvature in the second direction of the display image caused by the inclination of the transmission-type screen is smaller than that in another region, to be larger.

10. The virtual-image display device according to any one of claims 1 to 8, further comprising:
curvature adjusting means for adjusting a curvature in the second direction of the display image in which the magnitude of the curvature in the second direction of the display image caused by the inclination of the transmission-type screen is smaller than that in another region, to be the largest in the curvature in the second direction.

11. The virtual-image display device according to claim 9 or 10, wherein
the curvature adjusting means includes one or a plurality of refractive optical systems and/or reflective optical systems which are arranged in the light path of the scanning beam between the scanner and the transmission-type screen, and which correct the light path of the scanning beam.

12. The virtual-image display device according to any one of claims 9 to 11, wherein
the curvature adjusting means includes a control unit that warps image data.
